# EUROPÄISCHE PATENTSCHRIFT

(11) **EP 3 625 585 B1**
(45) Veröffentlichungstag und Bekanntmachung des Hinweises auf die Patenterteilung: **13.07.2022**
(21) Anmeldenummer: 18743396.6
(22) Anmeldetag: 18.05.2018
(51) Int. Cl.: G01S 7/40, G01S 7/497, G01S 13/86, G01S 13/931, G09B 9/54, G01S 17/931

(54) **SIMULATIONSVORRICHTUNG FÜR EINE KRAFTFAHRZEUGÜBERWACHUNG**
SIMULATION DEVICE FOR A MOTOR VEHICLE MONITORING SYSTEM
DISPOSITIF DE SIMULATION POUR LA SURVEILLANCE D'UN VÉHICULE AUTOMOBILE

(30) Priorität: 18.05.2017 DE 102017110908; 16.05.2018 DE 102018111709
(43) Veröffentlichungstag der Anmeldung: 25.03.2020
(73) Patentinhaber: KONRAD GmbH, 78315 Radolfzell (DE)
(72) Erfinder: KONRAD, Michael, 78315 Radolfzell (DE)
(74) Vertreter: Patentanwälte und Rechtsanwalt Weiß, Arat & Partner mbB
(86) Internationale Anmeldenummer: PCT/EP2018/063039
(87) Internationale Veröffentlichungsnummer: WO 2018/211056

(56) Entgegenhaltungen:
- DE-A1-102014 118 625
- DE-A1-102014 217 524
- US-B1- 8 368 876
- US-B1- 9 575 161

## Beschreibung

### Technisches Gebiet

Die Erfindung betrifft eine Simulationsvorrichtung für eine Kraftfahrzeugüberwachung nach dem Oberbegriff des Anspruchs 1 und ein Verfahren nach den Anspruch 7.

### Stand der Technik

Aus dem Stand der Technik ist bekannt, dass im Rahmen einer Kraftfahrzeugüberwachung Kamerasensoren, Radarsensoren und LiDAR Lichtmesssysteme bekannt und gebräuchlich sind.

In diesem Zusamenhang wird auf die DE 10 2014 217 524 A1 hingewiesen. Dort ist eine Prüfvorrichtung zur Prüfung von sicherheitstechnischen Einrichtungen eines Kraftfahrzeuges, wobei die Prüfvorrichtung eine Prüfeinheit umfasst, die in einem Umgebungsbereich eines zu prüfenden Kraftfahrzeuges positionierbar ist. Ferner weist die Prüfeinheit 1 zumindest ein Prüfmittel zum Prüfen einer sicherheitstechnischen Einrichtung eines Kraftfahrzeuges mit zumindest einem Datenverarbeitungsmittel auf.

Weiter wird auf die US 2014/0036084 A1 hingewiesen. Dort ist eine Linsenanordnung in einem Kraftfahrzeug offenbart, wobei die Linse die Entfernung der erfassten Gegenstände im Bereich der Sichtweite der Linse erfasst und an einen Rechner übermittelt.

In der DE 10 2014 118625 A1 wird weiterhin eine Sensoranordnung für einen Prüfstand eines Fahrerassistenzsystems eines Kraftfahrzeuges, ein Prüfstand sowie ein dazugehöriges Verfahren offenbart. Dabei ist ein Sensor umfasst, welcher dazu ausgelegt ist, ein Sensorsignal auszusenden und das von einem Objekt in einem Umgebungsbereich des Kraftfahrzeugs reflektierte Sensorsignal als Echosignal zu empfangen.

In der US 9 575 161 B1 wird ein Verfahren und ein System zum Testen und Auswerten einer Antwort eines Kraftfahrzeug-Radarsystems für ein spezifisches Fahrzeugsicherheitsszenario offenbart, wobei das Verfahren und System eine simulierte reflektierte Radarsignatur erzeugt, die mindestens einem virtuellen Ziel in einem spezifischen virtuellen Szenario entspricht.

In der US 8 368 876 B1 wird schließlich noch ein System und eine Methode zur Kalibrierung einer LIDAR-Einheit offenbart. Das System umfasst eine Lichtimpuls-Detektionseinheit, eine Verzögerungseinheit und ein zweidimensionales Ziel. Die Lichtimpuls-Erfassungseinheit empfängt einen Lichtimpuls von der LIDAR-Einheit. Die Verzögerungseinheit erzeugt einen oder mehrere verzögerte Lichtimpulse, die gegenüber dem von der LIDAR-Einheit empfangenen Lichtimpuls um ein bekanntes Intervall verzögert sind. Die verzögerten Lichtimpulse werden zur Beleuchtung des Ziels verwendet.

Gerade im Bereich des autonomen Fahrens kommen diese Sensoren zur Überwachung der Umgebung des Fahrzeugs zum Einsatz. Neben dem autonomen Fahren sind auch sogenannte Fahrassistenzsysteme entscheidend auf diese Sensoren angewiesen, um unfallfrei tätig werden zu können.

Im Rahmen der Qualitäts- und Funktionskontrolle der eingesetzten Sensoren werden aufwändige Arbeiten notwendig. So werden beispielsweise größere dreidimensionale Szenerien mit Personen und Sachen nachgestellt, um die Sensoren entsprechend testen zu können. Diese Aufbauten sind zeit- und kostenintensiv.

LiDAR (Abkürzug für Light detection and ranging) Lichtmesssysteme werden neben weiteren Anwendungen zur optischen Abstands- und Geschwindigkeitsmessung eingesetzt. LiDAR Lichtmesssysteme senden Licht aus und messen die Laufzeit, in der das Licht nach der Reflexion an einem Objekt wieder zum LiDAR Lichtmesssystem zurückkommt. Aus der bekannten Geschwindigkeit des Lichts folgt die Entfernung des Objekts vom LiDAR Lichtmesssystem. Je nach Auslegung eines LiDAR Lichtmesssystems sind Entfernungsmessungen im Bereich von wenigen Zentimetern bis zu mehreren Hunderttausend Kilometern möglich.

Wichtige Anwendungsbereiche für LiDAR Lichtmesssysteme besitzen einen Messbereich für den Abstand von etwa 1 m bis zu wenigen 100 m. Beispiele dieser Anwendungsbereiche sind mobile Instrumente zur optischen Entfernungsmessung und LiDAR Lichtmesssysteme für das Anwendungsfeld Automotive, nämlich Fahrerassistenzsysteme und autonomes Fahren.

Für den Test von LiDAR Lichtmesssystemen, beispielsweise in der industriellen Qualitätskontrolle, wird eine Methode benötigt, Messungen bei definierten Entfernungen durchzuführen. Dazu werden im einfachsten Fall Messstrecken dieser definierten Längen benötigt. Für Qualitätskontrollen werden ebenfalls definierte Umgebungsbedingungen bezüglich Umwelt, wie Temperatur, Feuchte und Fremdlicht entlang der Messstrecke sowie definierte optische Eigenschaften des Messobjekts benötigt. Die Einhaltung der Umgebungsbedingungen stellt einen erheblichen Anspruch an den Platzbedarf für Messstrecken. Teststrecken für Entfernungen über etwa 10 m Länge sind deshalb aufwändig zu realisieren.

Ist das LiDAR Lichtmesssystem mit mehreren Kanälen ausgestattet, die, analog einer herkömmlichen Kamera, ein Bild mit einem Öffnungswinkel aufnehmen, so erhöht sich der Platzbedarf im Vergleich zum linearen Entfernungsmesssystem. Für einen LiDAR - Lichtempfangssensor mit einem horizontalen Öffnungswinkel von 360°, einem vertikalen Öffnungswinkel von 45° und einer maximalen Messdistanz von 100 m wird ein Messplatz von 200 m Durchmesser und einer Höhe von 83 m benötigt.

Neben dem einfachen Test von LiDAR Lichtmesssystemen bei festen Entfernungen besteht der Anspruch an ein Testsystem darin, eine bewegte Szenerie bereitzustellen. Dies ist insbesondere notwendig, um in der Applikationsentwicklung LiDAR Sensoren zu testen. Um beispielsweise das Verhalten von LiDAR Lichtmesssystemen in der Anwendung autonomes Fahren zu testen, müssen Fahrten durchgeführt werden wobei Sensordaten aufgenommen werden. Dann kann aber nur diese Szenerie der durchgeführten Fahrt getestet werden.

### Aufgabe der Erfindung

Die Aufgabe der vorliegenden Erfindung ist es, die Nachteile aus dem Stand der Technik zu überwinden. Insbesondere soll eine Simulationsvorrichtung bereitgestellt werden, die alle unterschiedlichen eingesetzten Sensoren in einer Simulationsvorrichtung schnell und einfach unter realistischen Bedingungen kontrollieren kann.

### Lösung der Aufgabe

Zur Lösung der Aufgabe führen die Merkmale nach dem Anspruch 1 und 7.

Vorteilhafte Ausgestaltungen sind in den Unteransprüchen beschrieben.

Die Erfindung erlaubt es, dem LiDAR Lichtmesssystem jede beliebige bewegte Szenerie zu präsentieren. Anstelle des bei einer Messstrecke vom Messobjekt zum Sensor zurückkommenden zeitverzögerten Lichtsignals wird das zeitverzögerte Lichtsignal über eine einstellbare Verzögerungsstrecke generiert. Das vom LiDAR Lichtmesssystem ausgesandte Lichtsignal wird mit einem Photodetektor detektiert und die weitere Ausbreitung beispielsweise durch eine Lichtfalle abgeblockt. Der Zeitpunkt der Detektion des vom LiDAR Lichtmesssystem ausgehenden Lichtsignals wird als Triggerzeitpunkt für die Erzeugung des zeitverzögerten Signals verwendet.

Ein mit Bezug zum Trigger zeitverzögertes Signal wird generiert. In der Erfindung kann die Zeitverzögerung ausgehend von einer durch die Elektronik bedingten Minimalverzögerung beliebig eingestellt und verändert werden. Die Erzeugung des zeitverzögerten Signals geschieht mittels einer elektronischen Zeitverzögerungseinheit. Die Änderung der Zeitverzögerung erfolgt ebenfalls elektronisch und ist vorzugsweise in einem Bereich von >10 s-1. Das zeitverzögerte Signal wird zur Erzeugung eines Lichtsignals mittels eines geeigneten schnellen Verstärkers verwendet.

Das Signal stellt regelmässig ein Lichtsignal dar. Das Lichtsignal wird bevorzugt von einer LED oder einer Laserdiode erzeugt. Die LED umfasst dabei einen LED-Treiber. Die Laserdiode wiederum umfasst einen Laserdioden-Treiber. Eine Laserdiode (auch Halbleiterlaser genannt) ist ein mit der Leuchtdiode (LED) verwandtes Halbleiter-Bauteil, das jedoch Laserstrahlung erzeugt. In Laserdioden wird ein p-n-Übergang mit starker Dotierung bei hohen Stromdichten betrieben. Die Wahl des Halbleitermaterials bestimmt dabei die emittierte Wellenlänge, wobei heute ein Spektrum von Infrarot bis Ultraviolett abgedeckt wird.

Das so erzeugte Lichtsignal wird auf das LiDAR Lichtmesssystem geleitet und von diesem als Objekt in der Entfernung entsprechend der Verzögerungszeit interpretiert.

Für jeden Kanal des LiDAR Lichtmesssystems gibt es eine solche von den anderen Kanälen unabhängige Signalkette. Dadurch ist es möglich für das LiDAR System eine simulierte bewegte Umgebung zu generieren.
- Erzeugung von veränderbaren zeitverzögerten Signalen die einer bewegten 1 bis 3 dimensionalen Szene entsprechen, welche zur Laufzeit synchron an die Szenerie angepasst werden.
- Skalierbarkeit in der Kanal Anzahl von einem Kanal bis zur Auflösung des verwendeten optischen Systems zur Entfernungsmessung
- Skalierbarkeit in Entfernung ausgehend von einem Mindestabstand der begrenzt ist durch die Reaktionsgeschwindigkeit der verwendeten elektronischen Komponenten zur Detektion von Lichtimpulsen über die Zeitverzögerungsglieder bis zur Lichterzeugung bis hin zum maximalen Erfassungsbereiches des optischen Systems.
- Insbesondere für den Einsatz im zeitsynchronen Verbund von mehreren unterschiedlichen Sensor Simulatoren zur Visualisierung von virtuellen Realitäten.
- Insbesondere für den Bereich von ADAS (Advanced driver assistance systems)
- Einstellbarkeit einer statischen Zeitverzögerung welcher einer statischen Entfernung entspricht.

Eine erfindungsgemäße Simulationsvorrichtung hat gegenüber dem Stand der Technik insbesondere den Vorteil, dass nicht mehr jede Art von eingesetzten Sensoren in einer eigenen für diese Sensoren angepassten Simulationsumgebung getestet werden muss.

Vielmehr kann durch eine Kombination der Simulationsmuster erreicht werden, dass sämtliche eingesetzten Sensoren zur Fahrzeugüberwachung, beispielsweise im Rahmen des autonomen Fahrens, möglichst realitätsnah geprüft und getestet werden können.

In der Regel kommen im Rahmen der angesprochenen Kraftahrzeugüberwachung Radarsensoren, Kamerasensoren und LiDAR - Lichtempfangssensoren zum Einsatz.

Jede Art von Sensor benötigt eine eigens auf die Bedürfnisse des Sensors abgestimmte Simulationsumgebung, sodass es sehr zeitintensiv ist, wenn jede Art von Sensor jeweils in der entsprechenden Umgebung getestet werden muss.

Eine Kombination aller oben genannten Sensorenarten war bisher nicht möglich, da insbesondere die LiDAR - Lichtempfangssensoren nicht in einer entsprechenden Art und Weise getestet werden konnten. Dies soll mit der vorliegenden Erfindung abgestellt werden.

Dabei soll idealerweise ein einziger Rechner alle notwendigen Schritte zur Stimulation der angesprochenen Sensoren in einer kostengünstigen Art und Weise gewährleisten und dabei auch die Ergebnisse der Sensoren im Rahmen von Soll-/Ist-Abgleichen vornehmen.

Der Radarsensor soll dabei über einen Radarsignalgeber angesteuert bzw stimuliert werden. Der Kamerasensor soll über eine Auswahl von Linsen daraufhin getestet werden, ob beispielsweise eine Autofokussierung in der gewünschten Art und Weise auf unterschiedliche Entfernungen erfolgt.

Zuletzt soll der LiDAR - Lichtempfangssensor durch beispielsweise Verzögerung eines LiDAR - Lichtsignals eines LiDAR - Lichtsenders oder durch Einsatz eines externen Lichtsenders getestet werden. Dabei wird eine bestimmte Entfernung für den LiDAR - Lichtempfangssensor dadurch simuliert, dass das aufgenommene LiDAR - Lichtsignal entweder verzögert zurückgegeben wird oder ein Lichtsignal erst nach einer gewissen Zeitspanne nach dem Aktivieren des LiDAR - Lichtempfangssensors abgesendet wird. Dabei führt der Rechner einen ersten Soll-/Ist-Abgleich zur Kontrolle des Radarsensors durch. Dabei überprüft der Rechner, ob die vom Radarsignalgeber gesandten Radarsignale auch durch den Radarsensor den Anforderungen, also den Ist-Werten entsprechen.

Weiter führt der Rechner einen zweiten Soll-/Ist-Abgleich zur Kontrolle des Kamerasensors durch. Dabei vergleicht der Rechner, ob der Kamerasensor je nach Auswahl der Linse in einer bestimmten Zeit eine automatische Scharfstellung bzw. Fokussierung vornimmt. Dabei kann der Rechner auch eine andere Linse zum Einsatz bringen, die beispielsweise eine weitere Entfernung simuliert, wobei der Kamerasensor dann auf die weitere Entfernung das Testbild wieder in einer bestimmten Zeit, je nach Vorgabe der technischen Anforderungen, automatisch Fokussierung muss.

Auch wird ein dritter Soll-/Ist-Abgleich zur Kontrolle des LiDAR - Lichtempfangssensors durchgeführt. Dabei wird entweder das LiDAR - Lichtsignal des LiDAR-Lichtsenders verwendet oder das Lichtsignal eines autonomen Lichtsenders. Dabei kontrolliert der Rechner, ob die Zeitverzögerung zwischen dem Aktivieren des LiDAR - Lichtempfangssensors, dem verzögerten Absenden des Lichtsignals und dem Empfang des Lichtsignals durch den LiDAR - Lichtempfangssensor den im Rechner hinterlegten Werten entspricht.

Wichtig ist in diesem Zusammenhang, dass der Radarsignalgeber, die Linse und der Lichtsender in einem Zeitfenster von weniger als 50 ms den Radarsensor, den Kamerasensor und den Lichtempfangssensor synchron ansteuern. Durch die synchrone Ansteuerung kann dabei eine gegenseitige Kontrolle der Funktionalität des Radarsensors, des Kamerasensors und des Lichtempfangssensors erfolgen. Das Zeitfenster von 50 ms ist die maximale zulässige Abweichung, um eine gegenseitige Kontrolle der Bauteile zu gewährleisten. Auf diese Weise kann der Radarsensor beispielsweise in Abhängigkeit des Lichtempfangssensors getestet werden. Oder der Lichtempfangssensor in Abhängigkeit des Kamerasensors. Denn sieht beispielsweise der Kamerasensor etwas, aber der Lichtempfangssensor nicht, so liegt ein Störfall vor, welcher durch den Rechner angezeigt werden sollte. Sollte dies nicht geschehen, so ist ein fehlerhaftes Bauteil verbaut, was ausgetauscht werden muss.

### Figurenbeschreibung

Weitere Vorteile, Merkmale und Einzelheiten der Erfindung ergeben sich aus der nachfolgenden Beschreibung bevorzugter Ausführungsbeispiele sowie anhand der Zeichnungen; diese zeigen in:
- Figur 1: eine schematische Ansicht einer erfindungsgemäßen Simulationsvorrichtung
- Figur 2: eine schematische Schaltdarstellung;
- Figur 3: ein Ausführungsbeispiel für einen Teil der Figur 1;
- Figuren 4-6: ein weiteres Ausführungsbeispiel;
- Figuren 7 und 8: noch ein drittes Ausführungsbeispiel.

### Ausführungsbeispiel

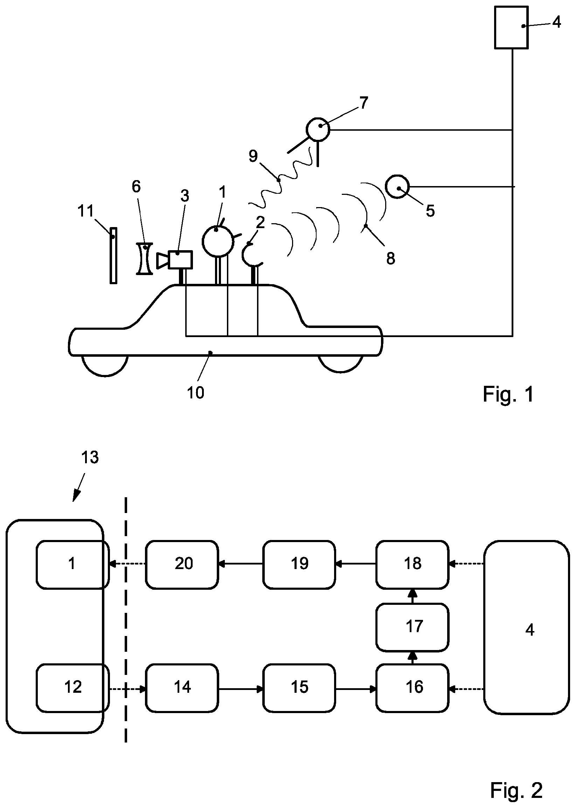

In Figur 1 ist ein Kraftfahrzeug 10 gezeigt, welches beispielsweise im Rahmen des autonomen Fahrens über einen LiDAR- Lichtempfangssensor 1 verfügt.

Weiter ist schematisch ein Radarsensor 2 und ein Kamerasensor 3 gezeigt.

Der LiDAR - Lichtempfangssensor 1 wird durch einen Lichtsender 7 stimuliert. Dies kann beispielsweise derart durchgeführt werden, wie es in der Figur 2 beschrieben ist. Es ist aber auch denkbar, dass ein LiDAR - Lichtsender 12 beispielsweise außer Funktion gesetzt wird und ein autonomer über einen Rechner 4 gesteuerter Lichtsender 7 angesteuert wird. Dabei bestimmt der Rechner 4 die Zeitdauer zwischen dem Beginn der Empfangsbereitschaft des LiDAR - Lichtempfangssensors 1 und der Aussendung eines Lichtsignals 9 durch den Lichtsender 7, um eine entsprechende Nähe oder Entfernung einer Reflexion zu simulieren.

Der LiDAR - Lichtempfangssensor 1 ist genauso wie der Lichtsender 7 mit dem Rechner 4 über eine Datenleitung oder über eine Funkleitung verbunden. Durch diese Verbindung werden die gewonnenen Daten des LiDARLichtempfangssensors 1 an den Rechner 4 übermittelt.

Weiter ist in der Figur 1 eine Linse 6 gezeigt. Die Linse 6 soll dabei dem Kamerasensor 3 ein Testbild 11 in einer definierten Entfernung zeigen, wobei das Testbild 11 immer in einer tatsächlichen Entfernung angeordnet ist, die einer nicht näher definierten Entfernung entspricht, weil die Linse 6 dem Kamerasensor 3 den Eindruck vermittelt, dass das Testbild beispielsweise weiter entfernt ist, als dies tatsächlich der Fall ist.

Der Kamerasensor 3, sowie die Linse 6 ist ebenfalls über die Datenleitung oder Funkleitung mit dem Rechner 4 verbunden. Dabei wird insbesondere durch den Rechner die Auswahl der Linse 6 bestimmt. Durch die Auswahl der Linse 6 definiert der Rechner 4 den zu prüfenden Entfernungsabstand, welcher durch den Kamerasensor 3 aufgenommen und auch beispielsweise automatisch ausgestellt werden soll. Diese automatische Scharfstellung kann durch die Auswahl der Linse 6 in einer Entfernung von x-Metern simuliert werden. Wird eine andere Linse ausgewählt, so kann eine Simulation für die automatische Scharfstellung beispielsweise für x+10 - Meter getestet werden.

Daneben ist der Radarsensor 2 gezeigt, welcher über einen Radarsignalgeber 5 stimuliert werden soll. Dabei simuliert der Radarsignalgeber 5 ein Radarsignal 8, welches wie ein Echo im Rahmen des Dopplereffekts durch den Radarsensor 2 wahrgenommen wird.

Der Radarsensor 2 und der Radarsignalgeber 5 sind ebenfalls über die Datenleitung oder Funkleitung mit dem Rechner 4 verbunden und übermitteln auf diese Weise die zum Beispiel durch den Radarsensor 2 gewonnenen Daten an den Rechner 4. Der Rechner 4 bestimmt in einem solchen Fall auch, ob und wann der Radarsignalgeber 5 ein Radarsignal 8 übermitteln soll.

In Figur 2 ist eine schematische Schaltdarstellung für das Ausführungsbeispiel gezeigt, dass nicht nur ein LiDAR - Lichtempfangssensor 1 eines LiDAR - Lichtmesssystems 13 genutzt wird, sondern auch ein LiDAR - Lichtsignalgeber 12.

In einem solchen Fall wird das ausgesandte LiDAR - Lichtsignal des LiDAR - Lichtsignalgebers 12 zunächst in einen Photodetector 14 geleitet. Als Photodetector 14 wird beispielsweise ein optischer Detektor, optoelektronischer Sensor oder andere elektronische Bauelemente bezeichnet, die Licht unter Benutzung des photoelektrischen Effekts in ein elektrisches Signal umwandeln oder einen von der einfallenden Strahlung abhängigen elektrischen Widerstand zeigen. Mit dem Begriff werden aber auch Applikationen benannt, die ein solches strahlungsmessendes Bauteil integriert haben.

Das vom Photodetector 14 aufgenommene Signal wird anschließend in einen Verstärker 15 weitergeleitet, welcher das Signal aufwertet und für die weitere Verarbeitung verstärkt.

Danach wird das Signal in einen Komparator 16 weitergegeben. Dabei überwacht ein Rechner 4 den Komparator 16 und die Weitergabe des Signals an ein Verzögerungsglied 17, welches die Weitergabe des Signals an einen LED-Treiber 18 in definierter Form und beeinflusst vom Rechner 4 mit unterschiedlicher zeitlicher Verzögerung weitergibt.

Der LED-Treiber 18 wiederum bringt eine LED 19 (Light Emitting Diode) oder eine Laserdiode zur Abgabe des Signals in einem optischen System 20 zum Leuchten. Nachdem das Signal durch die LED 19 oder die Laserdiode im optischen System 20 in ein Lichtsignal umgewandelt wurde, empfängt der LiDAR - Lichtempfangssensor 1 das Lichtsignal des optischen Systems 20.

In dem erfindungsgemäßen Verfahren zur Simulation einer Detektionsumgebung steuert der Rechner auf der einen Seite der Radarsensor 2 und den Kamerasensor 3 und den LiDAR - Lichtempfangssensor 1 und auf der anderen Seite den Radarsignalgeber 5, die Auswahl der Linse 6 und den Lichtsender 7.

Dabei führt der Rechner 4 einen ersten Soll-/Ist-Abgleich zur Kontrolle des Radarsensors 2 durch. Dabei überprüft der Rechner 4, ob die vom Radarsignalgeber 5 gesandten Radarsignale 8 auch durch den Radarsensor 2 den Anforderungen, also den Ist-Werten entsprechen.

Weiter führt der Rechner 4 einen zweiten Soll-/Ist-Abgleich zur Kontrolle des Kamerasensors 3 durch. Dabei vergleicht der Rechner 4, ob der Kamerasensor 3 je nach Auswahl der Linse 6 in einer bestimmten Zeit eine automatische Scharfstellung bzw. Fokussierung vornimmt. Dabei kann der Rechner 4 auch eine andere Linse zum Einsatz bringen, die beispielsweise eine weitere Entfernung simuliert, wobei der Kamerasensor 3 dann auf die weitere Entfernung das Testbild 11 wieder in einer bestimmten Zeit, je nach Vorgabe der technischen Anforderungen, automatisch Fokussierung muss.

Auch wird ein dritter Soll-/Ist-Abgleich zur Kontrolle des LiDAR - Lichtempfangssensors 1 durchgeführt. Dabei wird entweder das LiDAR - Lichtsignal des LiDAR-Lichtsenders 12 verwendet oder das Lichtsignal eines autonomen Lichtsenders 7. Dabei kontrolliert der Rechner 4, ob die Zeitverzögerung zwischen dem Aktivieren des LiDAR - Lichtempfangssensors 1, dem verzögerten Absenden des Lichtsignals und dem Empfang des Lichtsignals durch den LiDAR - Lichtempfangssensors 1 den im Rechner 4 hinterlegten Werten entspricht.

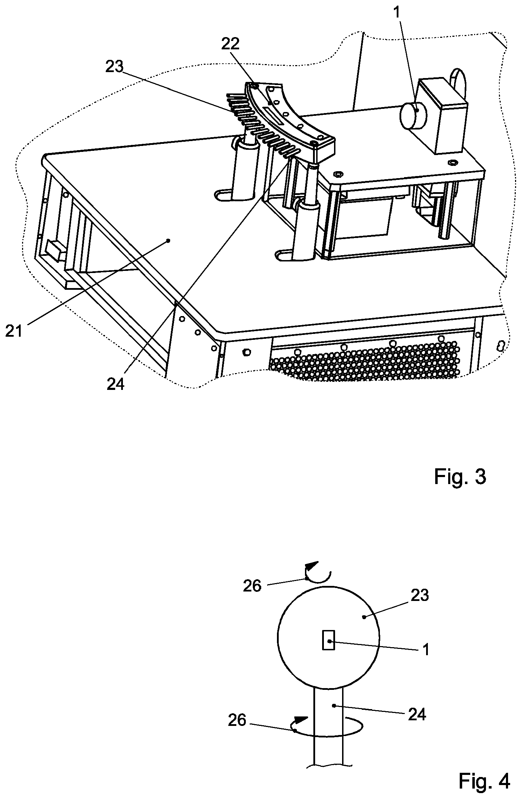

In Figur 3 ist ein Teil der Figur 1 im Rahmen eines Ausführungsbeipiels gezeigt. Und zwar wird der LiDAR - Lichtempfangssensor 1 hier statisch während der Simulation gehalten. Es ist eine Simulationsvorrichtung gezeigt, welche auf einem gemeinsamen Untergrund 21 angeordnet ist. Dabei ist der LiDAR - Lichtempfangssensor 1 in einem bestimmten Abstand zu dem Untergrund 21 angeordnet. Außerdem ist eine Halterung 22 gezeigt, welche zur Aufnahme mehrerer Lichtsender 23, 24 dient. Daneben kann eine Vielzahl von anderen Lichtsendern angebracht werden, die zwar in der Figur 3 gezeigt, aber nicht weiter benannt sind.

Der Lichtsender 23 und der weitere Lichtsender 24 werden durch die Halterung in der gleichen Ebene gehalten. Das bedeutet in diesem Ausführungsbeispiel in einem gleichen Abstand zu dem Untergrund 20. Sie sind nebeneinander angeordnet. Das wiederum bedeutet, dass der Lichtsender 23 und der weitere Lichtsender 24 hier in einer Teilkreisform mit zentrischer Ausrichtung zum LiDAR - Lichtempfangssensor 1 angeordnet sind.

In den Figuren 4 bis 6 ist ein Teil der Figur 1 im Rahmen eines weiteren Ausführungsbeipiels gezeigt. Und zwar wird der LiDAR - Lichtempfangssensor 1 hier während der Simulation um 360° rotiert.

Figur 4 zeigt einen Rotationskopf 23, in welchem der LiDAR - Lichtempfangssensor 1 mitrotierend aufgenommen ist.

Außerdem ist eine Achse 24 gezeigt, auf welcher der Rotationskopf 23 aufsitzt.

Daneben zeigen die beiden Rotationspfeile 26 die Rotationsrichtung in diesem Ausführungsbeispiel.

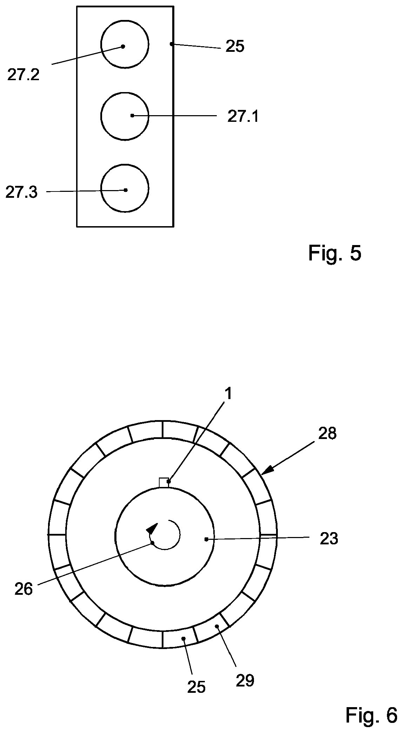

In Figur 5 ist eine Lichtsenderleiste 25 gezeigt. In der normalerweise zu dem Rotationskopf 23 zugewandten Seite der Lichtsenderleiste 25 ist gut zu erkennen, wie ein erster Lichtsender 27.1 angeordnet ist und wie zusätzliche andere erste Lichtsender 27.2, 27.3 unterhalb und oberhalb des zentralen ersten Lichtsenders 27.1 angeordnet sind.

In Figur 6 ist eine Draufsicht auf eine erfindungsgemäße Simulationsvorrichtung gezeigt. Dort ist im Zentrum eines Lichtleistenzylinders 28 der Rotationskopf 23 gezeigt, welcher in Richtung des Rotationspfeils 26 rotiert.

Dabei besteht der Lichtleistenzylinder 28 aus der Lichtsenderleiste 25 und der weiteren Lichtsenderleiste 29 und weiteren nicht beschriebenen aber in der Figur 6 gezeigten Lichtsenderleisten, die gemeinsam den Kreis um den Rotationskopf 23 schließen, um eine 360° - Umgebung simulieren zu können.

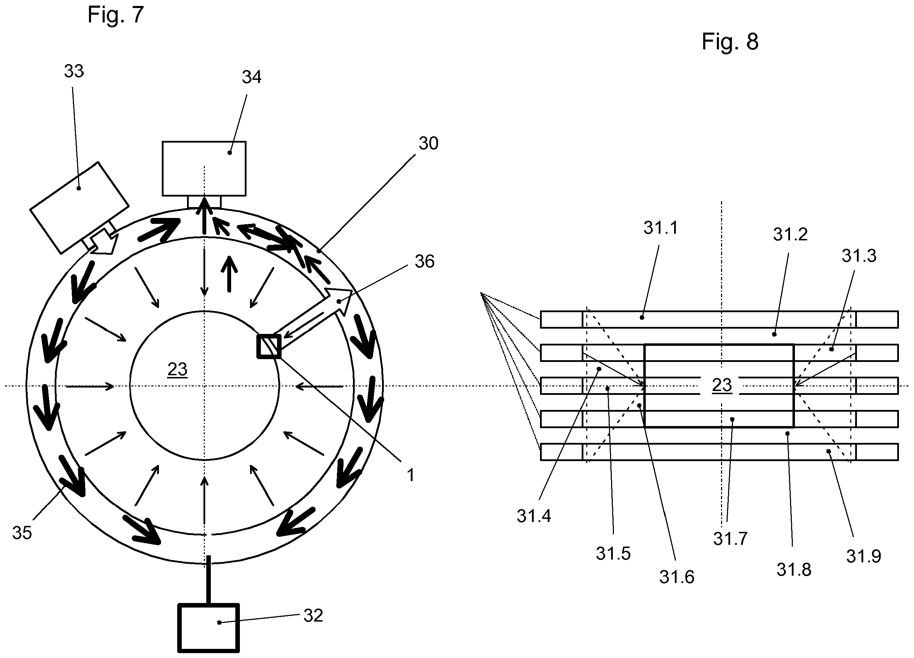

In den Figuren 7 und 8 ist ein drittes Ausführungsbeispiel gezeigt. Dabei zeigt die Figur 7 die Ansicht von oben und die Figur 8 die geschnittene Seitenansicht. In den beiden Figuren ist wieder der Rotationskopf 23 gezeigt, welcher ebenfalls um 360° rotierend angeordnet ist.

Der Rotationskopf 23 ist in der Figur 7 von einem Lichtring 30 umgeben. Der Lichtring 30 kann in einem 3D-Druckverfahren aus Kunststoff hergestellt werden. Der Lichtring 30 besteht aus eine Vielzahl übereinanderliegender Ringe 31.1 - 31.9., welche voneinander lichtdicht abgeschirmt sind.

In der Figur 7 ist außerdem eine Nullgradjustage 32 gezeigt. Bei Durchschreiten des Lichtempfangssensors 1 an der Nullgradjustage 32 wird dem Rechner das Signal des Durchschreitens der Nullgradjustage 32 mitgeteilt, sodass aufgrund der Rotationsgeschwindigeit des Rotationskopfes 23 und dem Zeitpunkt des Durchschreitens der Nullgradjustage 32 immer die genaue Position des Lichtempfangssensors 1 ermittelbar ist. Folglich kann die Position des Lichtempfangssensors 1 in Abhängigkeit der vergangenen Zeit seit Passieren der Nullgradjustage 32, und der Rotationsgeschwindigkeit ermittelt werden. Dies ist gerade in Abhängigkeit davon möglich, wenn ein Sender 33 ein Senderlicht hier in Form des Senderlichtpfeils 35 abstrahlt, wobei das Senderlicht im gesamten Lichtring 30 ausbreitet und sichtbar ist für den Lichtempfangssensor 1. Bei der jeweiligen Position des Lichtempfangssensors 1 wird wiederum ein Empfängerrücksignal 36 abgesendet, welches von einem Empfänger 34 detektiert wird.

Auf diese Weise ist eine Detektion der Position und der Funktionstüchtigkeit des Lichtempfangssensors 1 ermittelbar.

### Bezugszeichenliste

- 1: LiDAR-Lichtempfangssensor
- 2: Radarsensor
- 3: Kamerasensor
- 4: Rechner
- 5: Radarsignalgeber
- 6: Linse
- 7: Lichtsender
- 8: Radarsignal
- 9: Lichtsignal
- 10: Kraftfahrzeug
- 11: Testbild
- 12: LiDAR - Lichtsender
- 13: LiDAR - Lichtmessystem
- 14: Photodetector
- 15: Verstärker
- 16: Komperator
- 17: Verzögerungsglied
- 18: LED - Treiber
- 19: LED
- 20: Optisches System
- 21: Untergrund
- 22: Halterung
- 23: Rotationskopf
- 24: Achse
- 25: Lichtsenderleiste
- 26: Rotationspfeil
- 27: Lichtsender
- 28: Lichtleistenzylinder
- 29: Weitere Lichtsenderleiste
- 30: Lichtring
- 31: Ring
- 32: Nullgradjustage
- 33: Sender
- 34: Empfänger
- 35: Senderlichtpfeil
- 36: Empfängerrücksignal

## Patentansprüche

1. Simulationsvorrichtung für eine Kraftfahrzeugüberwachung, wobei die Simulationsvorrichtung einen Radarsensor (2) und einen Kamerasensor (3) und einen LiDAR-Lichtempfangssensor (1) und einen Rechner (4) umfasst, wobei
der Radarsensor (2) über einen Radarsignalgeber ansteuerbar ist, und
der LiDAR - Lichtempfangssensor (1) über einen Lichtsender (7, 12, 27.1, 27.2, 27.3) ansteuerbar ist, **dadurch gekennzeichnet,**
**dass** der Kamerasensor (3) über eine Linse ansteuerbar ist,
wobei der Radarsignalgeber, die Linse und der Lichtsender (7, 12, 27.1, 27.2, 27.3) in einem Zeitfenster von weniger als 50 ms den Radarsensor (2), den Kamerasensor (3) und den Lichtempfangssensor (1) synchron ansteuern.

2. Simulationsvorrichtung nach Anspruch 1, **dadurch gekennzeichnet, dass** der Radarsensor (2), der Kamerasensor (3) und der LiDAR - Lichtempfangssensor (1) mit dem Rechner (4) verbunden sind.

3. Simulationsvorrichtung nach Anspruch 2, **dadurch gekennzeichnet, dass** der Radarsignalgeber (5), die Linse (6) und der Lichtsender (7, 12, 27.1, 27.2, 27.3) mit dem Rechner (4) verbunden sind.

4. Simulationsvorrichtung nach einem der vorigen Ansprüche, **dadurch gekennzeichnet, dass** der Radarsignalgeber (5) durch den Rechner (4) aktivierbar ist, wobei durch den Rechner (4) ein erster Soll/Ist-Abgleich des Empfangs des Radarsensors (2) durchführbar ist.

5. Simulationsvorrichtung nach einem der vorigen Ansprüche, **dadurch gekennzeichnet, dass** die Linse (6) mit dem Kamerasensor (3) in Wirkverbindung bringbar ist, wobei der Rechner (4) einen zweiten Soll/Ist-Abgleich der Fokussierung des Kamerasensors (3) durchführt.

6. Simulationsvorrichtung nach einem der vorigen Ansprüche, **dadurch gekennzeichnet, dass** der Lichtsender (7, 12, 27.1, 27.2, 27.3) durch den Rechner (4) aktivierbar ist, wobei durch den Rechner (4) ein dritter Soll/Ist - Abgleich des Empfangs des LiDAR- Lichtempfangssensors (1) durchführbar ist.

7. Verfahren zur Simulation einer Detektionsumgebung für einen Radarsensor (2) und einen Kamerasensor (3) und einen LiDAR - Lichtempfangssensor (1), mit einem Lichtsender (7, 12, 27.1, 27.2, 27.3), aufweisend folgende Schritte:
- der Radarsensor (2) wird durch ein Radarsignal (8) eines Radarsignalgebers (5) angesteuert;
- ein Rechner (4) überwacht den Radarsignalgeber (5) und den Radarsensor (2);
- der Rechner (4) führt einen ersten Soll-/Ist-Abgleich durch;
- der Kamerasensor (3) wird durch eine Linse (6) angesteuert;
- der Rechner (4) überwacht die Linse (6) und den Kamerasensor (3);
- der Rechner (4) führt einen zweiten Soll-/Ist-Abgleich durch;
- der LiDAR - Lichtempfangssensor (1) wird durch ein Lichtsignal des Lichtsenders (7, 12, 27.1, 27.2, 27.3) aktiviert;
- der LiDAR - Lichtempfangssensor (1) registriert das Lichtsignal (9);
- der Rechner (4) führt einen dritten Soll-/Ist-Abgleich durch, wobei
- der Radarsignalgeber, die Linse und der Lichtsender (7, 12, 27.1, 27.2, 27.3) in einem Zeitfenster von weniger als 50 ms den Radarsensor (2), der Kamerasensor (3) und den Lichtempfangssensor (1) synchron ansteuern.

## Claims

1. Simulation device for motor vehicle monitoring, wherein the simulation device comprises a radar sensor (2) and a camera sensor (3) and a LiDAR light receiving sensor (1) and a computer (4), wherein the radar sensor (2) can be controlled via a radar signal transmitter, and the LiDAR light receiving sensor (1) can be controlled via a light transmitter (7, 12, 27.1, 27.2, 27.3),
**characterized in that**
the camera sensor (3) can be controlled via a lens,
wherein the radar signal transmitter, the lens and the light transmitter (7, 12, 27.1, 27.2, 27.3) synchronously control the radar sensor (2), the camera sensor (3) and the light receiving sensor (1) in a time window of less than 50 ms

2. Simulation device according to claim 1, **characterized in that** the radar sensor (2), the camera sensor (3) and the LiDAR light receiving sensor (1) are connected to the computer (4).

3. Simulation device according to claim 2, **characterized in that** the radar signal transmitter (5), the lens (6) and the light transmitter (7, 12, 27.1, 27.2, 27.3) are connected to the computer (4).

4. Simulation device according to one of the previous claims, **characterized in that** the radar signal transmitter (5) can be activated by the computer (4), it being possible for the computer (4) to carry out a first setpoint/actual comparison of the reception of the radar sensor (2).

5. Simulation device according to one of the previous claims, **characterized in that** the lens (6) can be brought into operative connection with the camera sensor (3), the computer (4) carrying out a second setpoint/actual comparison of the focusing of the camera sensor (3).

6. Simulation device according to one of the previous claims, **characterized in that** the light transmitter (7, 12, 27.1, 27.2, 27.3) can be activated by the computer (4), it being possible for the computer (4) to carry out a third setpoint/actual comparison of the reception of the LiDAR light receiving sensor (1).

7. Method for simulating a detection environment for a radar sensor (2) and a camera sensor (3) and a LiDAR light receiving sensor (1), having a light transmitter (7, 12, 27.1, 27.2, 27.3), comprising the following steps:
- the radar sensor (2) is driven by a radar signal (8) of the radar signal transmitter (5);
- a computer (4) monitors the radar signal transmitter (5) and the radar sensor (2);
- the computer (4) carries out a first setpoint/actual comparison;
- the camera sensor (3) is controlled by a lens (6);
- the computer (4) monitors the lens (6) and the camera sensor (3);
- the computer (4) carries out a second setpoint/actual comparison;
- the LiDAR light receiving sensor (1) is activated by a light signal from the light transmitter (7, 12, 27.1, 27.2, 27.3);
- the LiDAR light receiving sensor (1) registers the light signal (9);
- the computer (4) carries out a third setpoint/actual adjustment, whereby
- the radar signal transmitter, the lens and the light transmitter (7, 12, 27.1, 27.2, 27.3) synchronously control the radar sensor (2), the camera sensor (3) and the light receiving sensor (1) in a time window of less than 50 ms.

## Revendications

1. Dispositif de simulation pour la surveillance de véhicule automobile, dans lequel le dispositif de simulation comprend un capteur radar (2) et un capteur caméra (3) et un capteur de réception de lumière LiDAR (1) et un ordinateur (4),
dans lequel le capteur radar (2) peut être commandé par l'intermédiaire d'un émetteur de signal radar, et le capteur de réception de lumière LiDAR (1) peut être commandé par l'intermédiaire d'un émetteur de lumière (7, 12, 27.1, 27.2, 27.3), **caractérisé en ce que** le capteur caméra (3) peut être commandé par l'intermédiaire d'une lentille,
dans lequel l'émetteur de signal radar, la lentille et l'émetteur de lumière (7, 12, 27.1, 27.2, 27.3) commandent de manière synchrone le capteur radar (2), le capteur caméra (3) et le capteur de réception de lumière (1) dans une fenêtre temporelle de moins de 50 ms.

2. Dispositif de simulation selon la revendication 1, **caractérisé en ce que** le capteur radar (2), le capteur caméra (3) et le capteur de réception de lumière LiDAR (1) sont connectés à l'ordinateur (4).

3. Dispositif de simulation selon la revendication 2, **caractérisé en ce que** l'émetteur de signal radar (5), la lentille (6) et l'émetteur de lumière (7, 12, 27.1, 27.2, 27.3) sont connectés à l'ordinateur (4).

4. Dispositif de simulation selon l'une des revendications précédentes, **caractérisé en ce que** l'émetteur de signal radar (5) peut être activé par l'ordinateur (4), une première comparaison cible/réelle de la réception du capteur radar (2) pouvant être effectuée par l'ordinateur (4).

5. Dispositif de simulation selon l'une des revendications précédentes, **caractérisé en ce que** la lentille (6) peut être amenée en liaison fonctionnelle avec le capteur caméra (3), une deuxième comparaison cible/réelle de la mise au point du capteur caméra (3) étant effectuée par l'ordinateur (4).

6. Dispositif de simulation selon l'une des revendications précédentes, **caractérisé en ce que** l'émetteur de lumière (7, 12, 27.1, 27.2, 27.3) peut être activé par l'ordinateur (4), une troisième comparaison cible/réelle de la réception du capteur de réception de lumière LiDAR (1) pouvant être effectuée par l'ordinateur (4).

7. Procédé permettant la simulation d'un environnement de détection pour un capteur radar (2) et un capteur caméra (3) et un capteur de réception de lumière LiDAR (1), comportant un émetteur de lumière (7, 12, 27.1, 27.2, 27.3) et présentant les étapes suivantes :
- le capteur radar (2) est commandé par un signal radar (8) d'un émetteur de signal radar (5) ;
- un ordinateur (4) surveille l'émetteur de signal radar (5) et le capteur radar (2) ;
- l'ordinateur (4) effectue une première comparaison cible/réelle ;
- le capteur caméra (3) est commandé par une lentille (6) ;
- l'ordinateur (4) surveille la lentille (6) et le capteur caméra (3) ;
- l'ordinateur (4) effectue une deuxième comparaison cible/réelle ;
- le capteur de réception de lumière LiDAR (1) est activé par un signal de lumière de l'émetteur de lumière (7, 12, 27.1, 27.2, 27.3) ;
- le capteur de réception de lumière LiDAR (1) enregistre le signal de lumière (9) ;
- l'ordinateur (4) effectue une troisième comparaison cible/réelle,
- l'émetteur de signal radar, la lentille et l'émetteur de lumière (7, 12, 27.1, 27.2, 27.3) commandant de manière synchrone le capteur radar (2), le capteur caméra (3) et le capteur de réception de lumière (1) dans une fenêtre temporelle de moins de 50 ms.
